(19) **Europäisches Patentamt / European Patent Office / Office européen des brevets**

(11) **EP 3 327 536 B1**

(12) **EUROPEAN PATENT SPECIFICATION**

(45) Date of publication and mention
of the grant of the patent:
**23.02.2022 Bulletin 2022/08**

(21) Application number: **15899031.7**

(22) Date of filing: **17.07.2015**

(51) International Patent Classification (IPC):
**G05F 1/575** *(2006.01)*    **G05F 1/56** *(2006.01)*

(52) Cooperative Patent Classification (CPC):
**G05F 1/561; G05F 1/575**

(86) International application number:
**PCT/RU2015/000457**

(87) International publication number:
**WO 2017/014663 (26.01.2017 Gazette 2017/04)**

(54) **REGULATOR FOR REGULATING DIRECT CURRENT FLOWING IN A LOAD POWER SUPPLY CIRCUIT**

REGLER ZUR REGELUNG EINES DIREKTEN STROMFLUSSES IN EINER LASTSTROMVERSORGUNGSSCHALTUNG

RÉGULATEUR DE COURANT CONTINU CIRCULANT DANS UN CIRCUIT D'ALIMENTATION DE CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.05.2018 Bulletin 2018/22**

(73) Proprietor: **Closed-up Joint-Stock Company Drive Novosibirsk 630090 (RU)**

(72) Inventors:
• **ROMANOV, Yuriy Igorevich
Novosibirsk 630048 (RU)**

• **MALETSKIY, Stanislav Vladimirovich
G.Novosibirsk 630054 (RU)**

(74) Representative: **Spengler, Robert
Potthast & Spengler
Patentanwälte PartG mbB
Magirus-Deutz-Straße 12
89077 Ulm (DE)**

(56) References cited:
**RU-C1- 2 220 438          SU-A1- 349 989
US-A1- 2014 002 040     US-A1- 2015 137 780**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the disclosure

The proposed design relates to electrical engineering and can be used for providing regulators of direct current flowing through a load, the regulators having a low level of watt consumption.

Description of the related art

There have been known comparable designs, see, for example, information published at http://radiobooka.ru/radionach/163-regulyatory-napryazhenuiya-i-toka.html about a regulator of direct current flowing through a load which comprises:

- a setter of output current flowing through the load, the setter including a source of direct voltage (1...2V) and a variable resistor connected by one of its terminals to a positive terminal of the direct voltage source;
- a direct voltage - direct current converter, connected by its first (control) terminal to an output of the setter of the output current flowing through the load, the converter including a transistor, the emitter thereof being the first (control) terminal of the direct voltage - direct current converter, the collector thereof being an output of the direct voltage - direct current converter, whereas the base of the transistor is a second input of the direct voltage - direct current converter;
- a source of input direct voltage connected by its positive terminal to the second input of the direct voltage - direct current converter and to an input of the setter of the output current flowing through the load;
- the load connected by one terminal thereof to an output of the direct voltage - direct current converter, and by another terminal thereof to a negative terminal of the source of input direct voltage.

Common features of the proposed design and the above-characterized design are:

- the setter of output current flowing through the load;
- the direct voltage - direct current converter, connect by its first (control) terminal to an output of the setter of the output current flowing through the load;
- the load connected by one terminal thereof to an output of the direct voltage - direct current converter;
- a source of input direct voltage connected by one terminal thereof to another terminal of the load, and by another terminal thereof to the second input of the direct voltage - direct current converter.

Also known is a comparable design, see "Electronic Circuits: Handbook for Design and Application", by U. Tietze and C. Schenk, Moscow, "Mir", 1982, Fig. 12.11a, where a regulator of direct current flowing through a load is presented selected as the closest analog - prototype - comprising:

- a setter of output current flowing through the load, the setter including a source of direct variable voltage;
- a direct voltage - direct current converter including a transistor whose collector is an output of the direct voltage - direct current converter, an operational amplifier whose non-inverting input is a first input of the constant voltage - constant current converter, an inverting input of the operational amplifier being connected to the emitter of the transistor and an output of the operational amplifier being connected to the base of the transistor, and a measuring resistor, whose one terminal is connected to the emitter of the transistor and whose another terminal is a second input of the direct voltage - direct current converter;
- a load connected by one of its terminals to the output of the direct voltage - direct current converter;
- a source of input direct voltage connected by its positive terminal to another terminal of the load and by its negative terminal - to a second input of the direct voltage - direct current converter;

Common features of the proposed design and the design-prototype are:

- the setter of output current flowing through the load;
- the direct voltage - direct current converter connected by its first (control) input to the output of the setter of output current flowing through the load;
- the load connected by one of its terminals to the output of the direct voltage - direct current converter;
- the source of input direct voltage connected by its positive terminal to another terminal of the load and by its negative terminal to the second input of the direct voltage - direct current converter.

The technical result, which cannot be achieved by either of the above-described designs, lies in lowering watt consumption when regulating direct load current The reason why this technical result cannot be achieved is that - in prior art designs - direct current flowing through the load applies not only feedback signal from a terminal of the measuring resistor to the inverting input of the operational amplifier but also applies bias direct voltage to the inverting input of the operational amplifier, which voltage is substantially large for conventional operational amplifiers, and this results in substantial power consumption.

US 2014/0002040 A1 discloses a linear current regulator for regulating a brightness of a LED. The linear current regulator has a regulating unit coupled to a reference current source for outputting a current signal to regulate a reference current of the reference current source.

With the above-discussed features and qualities of the prior art designs in view, one can conclude that the object providing a regulator of direct current flowing through the load, having insignificant power consumption is a relevant one to this day.

SUMMARY OF THE INVENTION

The above-identified technical result is achieved by providing a regulator of direct current flowing through a load according to the appended claim 1.

The above-described implementation of the direct voltage - direct current converter and its connections makes it possible, at applying direct voltage to the direct voltage - direct current converter, to eventually convert the input direct voltage into a unvarying direct current whose value depends on the output voltage of the setter of output current flowing through the load.

As output current flows through the measuring resistor of the direct voltage - direct current converter, a voltage drop appears across the measuring resistor which, as a feedback signal via the feedback element is applied to the inverting input of the operational amplifier of the direct voltage - direct current converter.

At the same time, a bias voltage making the operation mode of the operational amplifier possible is applied through a reference resistor to the same inverting input of the operational amplifier from a source of reference voltage of the direct voltage - direct current converter. In practice, this bias voltage does not depend on the value of either the output current or the measuring resistor. Under the feedback signal voltage applied from the output of the feedback element to the inverting input of the operational amplifier, the output current becomes stabilized, the value of the stabilized output current being defined by the voltage applied to the non-inverting input of the operational amplifier (from the output of the setter of the output current flowing through the load of the direct voltage - direct current converter).

Thus, in the proposed design, unlike the prototype, forming the bias voltage at the inverting input of the operational amplifier, which makes the operation mode of the operational amplifier possible, is not related to forming the feedback signal stabilizing the output current value at a set level. As a result, a reasonably small value of the measuring resistor can be chosen, and, thus, the power consumed by the proposed regulator of the direct current flowing through the load direct voltage - direct current converter can be substantially reduced.

This can be illustrated by trivial calculations.

Suppose that the required bias voltage $U_{bias}$ at the inverting input of the operational amplifier (the voltage which makes the operation mode of the operational amplifier possible) is $U_{bias}$ =2.0 V. Suppose that three values of the output current of the regulator of the direct current flowing through the load should be stabilized: $I_{out}$ = 0.1 A, 1.0 A, and 10.0 A.

For the prototype, to form the bias voltage equal to 2.0 V with the current of 0.1 A, the value $R_{msr}$ of the measuring resistor will be $R_{msr}$= $U_{bias}$ / $I_{out}$ = 2.0 : 0.1 = 20 Ohm.

Then, the consumed power for the prototype, $P_{ptt}$, at the current of 0.1 A will be

$$P_{ptt} = I_{out}^2 \cdot R_{msr} = 0.1^2 \cdot 20 = 0.2 \text{ Wt.}$$

At the prototype, to form the bias voltage equal to 2.0 V with the current of 1.0 A, the value $R_{msr}$ of the measuring resistor will be $R_{msr}$ = $U_{bias}$ / $I_{out}$ = 2.0 : 1.0 = 2.0 Ohm.

Then, the consumed power, $P_{ptt}$, at the current of 1.0 A will be

$$P_{ptt} = I_{out}^2 \cdot R_{msr} = 1.0^2 \cdot 2.0 = 2 \text{ Wt.}$$

And at the current of 10 A, the value $R_{msr}$ of the measuring resistor for the prototype is $R_{msr}$= $U_{bias}$ / $I_{out}$ = 2.0 : 10.0 = 0.2 Ohm, the consumed power, $P_{ptt}$, at the current of 10.0 A being:

$$P_{ptt} = I_{out}^2 \cdot R_{msr} = 10.0^2 \cdot 0.2 = 20 \text{ Wt.}$$

In the proposed design, to the contrary, the value of the measuring resistor can be chosen arbitrary small, for example, 0.1 Ohm, without regard to the required bias voltage.

Then, with the current of 0.1 A, the power consumed across the measuring resistor in the proposed design will be

$$P_{propdes} = I_{out}^2 \cdot R_{msr} = 0.1^2 \cdot 0.1 = 0.001 \text{ Wt.}$$

With the current of 1.0 A, the power consumed across the measuring resistor in the proposed design will be

$$P_{propdes} = I_{out}^2 \cdot R_{msr} = 1.0^2 \cdot 0.1 = 0.1 \text{ Wt.}$$

With the current of 10.0 A, the power consumed across the measuring resistor in the proposed design will be

$$P_{propdes} = I_{out}^2 \cdot R_{msr} = 10.0^2 \cdot 0.1 = 10 \text{ Wt.}$$

That being said, it is noted that additional power in the proposed design is dissipated in the feedback element and in the reference voltage source. Assume that the feedback element is a resistor of $R_{fe}$ = 3.9 kOhm, which in practice secures reliable operation of the apparatus made in accordance with the proposed design. Then, consumed power in the feedback element will be

$$P_{fe} = U_{bias}^2 / R_{fe} = 0.4^2 : 3900 = 0.00004 \text{ Wt.}$$

Consumed power of the reference voltage source in the proposed design is of about the same value. Adding these values to those calculated in the above and presenting the results in the comparison table will show the following:

Table Summarized calculations

| No | Output current of the direct current regulator, A | Consumed power in the prototype, Wt., | Consumed power in the proposed design, Wt. | Consumed power gain, times |
|---|---|---|---|---|
| 1 | 0.1 | 0.2 | 0.00108 | ~ 200 |
| 2 | 1.0 | 2.0 | 0.10008 | ~ 20 |
| 3 | 10.0 | 20 | 10.00008 | ~ 2 |

It follows from the table that the gain in times in consumed power can top scores and hundreds. Those skilled in the art would appreciate that the bias voltage $U_{bias}$ at the inverting input of the operational amplifier, securing its operation mode, can be, depending on the type of the operational amplifier, 0.4 V or 1.0 V or 4.0 V, and higher; output current of the direct current regulator can be from the very few milliamperes up to scores amperes. In all these given cases, the right choice of the measuring resistor, feedback element, and reference voltage source in the proposed design makes it possible to reduce consumed power as compared with the prototype by a factor of scores and even hundreds. It is there where the above-mentioned technical result shows.

The proposed regulator of direct current flowing through the load is explained below with reference to the drawing where a functional circuit of the regulator of direct current flowing through the load is presented, which comprises:

- a setter 1 of the value of the direct current flowing through a load made as a direct voltage source 2 and a variable resistor 3 connected by its first terminal 4 to a positive terminal 5 of a direct voltage source 2 and by its second terminal 6 to a negative terminal 7 of the direct voltage source 2
- a direct voltage - direct current converter 8 made as a transistor 9, a measuring resistor 10 connected by one of its terminals, 11, to the emitter 12 of the transistor 9, and an operational amplifier 13 connected by its inverting input 14 to an output 15 of a feedback element 16 and to a first terminal 17 of a reference resistor 18 connected by its second terminal 19 to a positive terminal 20 of a reference direct voltage source 21.

At that, a non-inverting input 22 of the operational amplifier 13 of the direct voltage-direct current converter 8 via a first (control) input 23 of the direct voltage-direct current converter 8 is connected to a third terminal 24 of the variable resistor 3 which is an output 25 of the setter 1 of the output current flowing through the load, an output 26 of the operational amplifier 13 is connected to the base 27 of the transistor 9, and a negative terminal 28 of the direct voltage source 21 is connected to the second terminal 29 of the measuring resistor 10 and is a second output 30 of the direct voltage - direct current converter 8;

- a load 31 connected by one, 32, of its terminals to the collector 33 of the transistor 9, which is an output 34 of the direct voltage - direct current converter 8;
- an input direct voltage source 35 connected by its positive terminal 36 to another terminal 37 of the load 31, whereas a negative terminal 38 of the input direct voltage source 35 is connected to the frame (a common line for connecting structure elements) of the proposed regulator of direct current flowing through the load 31, to the other terminal 29 of the measuring resistor 10 incorporated in the direct voltage - direct current converter 8 via the second input 30 of the direct voltage - direct current converter 8, as well as - via a terminal 39 of the setter 1 of output current flowing through the load - to the negative terminal 7 of the direct voltage source 2 of the setter 1 of output current flowing through the load

The proposed regulator of direct current flowing through the load operates as follows.

Applied from the output 25 of the setter 1 of output current flowing through the load 31 to the first (control) input 23 of the direct voltage - direct current converter 8 (to the non-inverting input 22 of the operational amplifier 13) is a voltage required for producing current of a preset value flowing through the load 31.

This voltage can be obtained, for example, by providing a source 2 of direct voltage and the variable resistor 3 connected between the positive 5 and negative 7 terminals of the second source 14 of direct voltage, respectively. From the third terminal 24 of the variable resistor 17, the required control voltage is applied to the output 25 of the setter 1 of output current flowing through the load 31.

Voltage across the measuring resistor 10 of the direct voltage - direct current converter 8 is stabilized by means of a voltage stabilizer comprising, for example, the operational amplifier 13, transistor 9 and feedback element 16 resulting in the flowing of the current through the measuring resistor 10, which will be independent of either voltage at the output of the direct voltage - direct current converter 8 or load 31, the value of the current being defined by the value of the measuring resistor 10 and the output voltage of the setter 1 of output current flowing through the load 31. In this case, if the output voltage of the setter 1 of output current flowing through the load 31 connected to the non-inverting input 22 of the operational amplifier 13 of the direct voltage - direct current converter 23 is higher that the voltage at the inverting input 14 of the operational amplifier 13 connected to the emitter 12 of the transistor 9 and to the measuring resistor 10 of the direct voltage - direct current converter 8 via the feedback element 16, then applied to the output 26 of the operational amplifier 13 connected to the base 27 of the transistor 9 will be such a voltage that the transistor 9 opens, and the voltage across the measuring resistor 10 will be increasing up to the moment when the voltage at the inverting input 14 of the operational amplifier 13 reaches the value of the output voltage of the setter 1 of output current flowing through the load 31.

At this moment, the voltage at the output 26 of the operational amplifier 13 will stop rising, the voltage at the emitter 12 of the transistor 9 will stop rising as well and will be of such value where the voltage at the point of connection of the emitter 12 of the transistor 9 and the measuring resistor 10 will be equal to the voltage at the non-inverting input 22 of the operational amplifier 13 (taking into account the voltage drop at the feedback element 16, as well as the voltage at the first terminal 17 of the reference resistor 18 connected by its second terminal 19 to the positive terminal 20 of the first source 21 of the reference voltage), and this state will be maintained under variations of the load 31.

Consequently, as the value of the load 31 varies, the direct current flowing therethrough will be stabilized, and its value is defined by the value of the output voltage of the setter 1 of output current flowing through the load 31 and the value of the measuring resistor 10.

This being said, the operation mode of the operational amplifier 13 is defined by the bias voltage coming from the terminal 20 of the reference voltage source 21 via the reference resistor 18 to the inverting input 14 of the operational amplifier 13. Due to that, the value of the measuring resistor 10 can be chosen small enough, no matter of what the value of the required bias voltage is, therefore the resistor dissipation power also becomes small enough.

As a result, in the proposed regulator of direct current flowing through the load, makes it possible, due to the separate forming of the bias voltage at the inverting input 14 of the operational amplifier 13 and of the feedback signal coming via the feedback element 16 to the same input, to dramatically decrease watt consumption.

It is to be noted that the proposed design can be implemented in many ways. For example, the transistor 9 can be not only a bipolar one, but also a MOS transistor, an IGBT, and in fact any linear controlling element.

The output voltage of the setter 1 of output current flowing through the load can also be formed in different ways, as compared with the above-disclosed manner, such as converting pulse-width modulation into the control voltage, or converting the code of a controlling protocol (DALI, for example) into the control voltage, or any other control action - control voltage conversion.

A common power circuit can be used to supply the setter 1 of output current flowing through the load and to establish the reference voltage source 21. A current source can function as the source of the reference voltage 21 and the reference resistor 18, and so on.

All these various ways of implementing the proposed design ultimately yield the same technical result - decreasing the watt consumption through the separate forming of the bias voltage (at the inverting input of the operational amplifier) and of the feedback signal (coming from the measuring resistor via the feedback element to the same input).

**Claims**

1.   A regulator of direct current flowing through a load (31), the regulator comprising a setter (1) of an output current flowing through the load (31), a direct voltage-direct current converter (8) connected by a first input thereof (23) to an output (25) of the setter (1), the load (31) connected by a terminal thereof (32) to an output (34) of the converter (8), and an input direct voltage source (35) connected by a positive terminal thereof (36) to another terminal (37) of the load (31) and by a negative terminal thereof (38) to a frame (30, 38, 39) of the regulator, the frame constituting a second input of the converter (8),
    **characterized in that**
    the converter (8) comprises a transistor (9), a collector (33) of the transistor (9) being the output (34) of the converter (8), a measuring resistor (10) connected by a terminal thereof (11) to an emitter (12) of the transistor (9) and by another terminal thereof (29) to the frame (30, 38, 39) of the regulator, a feedback element (16) connected by an input thereof (20) to the emitter (12) of the transistor (9), and an operational amplifier (13) connected by an inverting input thereof (14) to an output (15) of the feedback element (16) and to a first terminal (17) of a reference resistor (18) connected by a second terminal thereof (19) to a positive terminal (20) of a reference direct voltage source (21), an output (26) of the operational amplifier (13) being connected to a base (27) of the transistor (9), a non-inverting input (22) of the operational amplifier (13) being the first input (23) of the converter (8), a negative terminal (28) of the reference direct voltage source (21) being connected to the frame (30, 38, 39) of the regulator.

**Patentansprüche**

1.   Regler eines Gleichstroms, der durch eine Last (31) fließt, wobei der Regler einen Setter (1) eines Ausgangsstroms, der durch die Last (31) fließt, einen Gleichspannungs-Gleichstrom-Wandler (8), der durch einen ersten Eingang davon (23) mit einem Ausgang (25) des Setters (1) verbunden ist, wobei die Last (31) durch einen Pol davon (32) mit einem Ausgang (34) des Wandlers (8) verbunden ist, und eine Eingangs-Gleichstromquelle (35), die durch einen Pluspol davon (36) mit einem anderen Pol (37) der Last und durch einen Minuspol (38) mit einem Rahmen (30, 38, 39) des Reglers verbunden ist, umfasst, wobei der Rahmen einen zweiten Eingang des Wandlers (8) darstellt, **dadurch gekennzeichnet, dass** der Wandler (8) einen Transistor umfasst, wobei ein Kollektor (33) des Transistors (9) ein Ausgang (34) des Wandlers (8) ist, einen Messwiderstand (10), der durch einen Pol davon (11) mit einem Emitter (12) des Transistors (9) und durch einen anderen Pol (29) davon mit einem Rahmen (30, 38, 39) des Reglers verbunden ist, ein Rückkoppelungselement (16), das durch einen Eingang davon (20) mit dem Emitter (12) des Transistors (9) verbunden ist, und einen Operationsverstärker (13), der durch einen invertierenden Eingang davon (14) mit einem Ausgang (15) des Rückkoppelungselements (16) und mit einem ersten Pol (17) eines Referenzwiderstands (18) verbunden ist, der durch einen zweiten Pol davon (19) mit einem Pluspol (20) einer Referenz-Gleichspannungsquelle (21) verbunden ist, wobei ein Ausgang (26) des Operationsverstärkers (13) mit einer Basis (27) des Transistors (9) verbunden ist, wobei ein nicht invertierender Eingang (22) des Operationsverstärkers (13) der erste Eingang (23) des Wandlers (8) ist, wobei ein Minuspol (28) der Referenz-Gleichspannungsquelle (21) mit dem Rahmen (30, 38, 39) des Reglers verbunden ist.

**Revendications**

1.   Régulateur de courant continu circulant à travers une charge (31), le régulateur comprenant

    un dispositif de réglage (1) d'un courant de sortie circulant à travers la charge (31), un convertisseur tension continue-courant continu (8) connecté par une première entrée de celui-ci (23) à une sortie (25) du dispositif de réglage (1), la charge (31) connectée par une borne de celle-ci (32) à une sortie (34) du convertisseur (8), et une source de tension continue d'entrée (35) connectée par une borne positive de celle-ci (36) à une autre borne (37) de la charge (31) et par une borne négative de celle-ci (38) à un cadre (30, 38, 39) du régulateur, le cadre constituant une deuxième entrée du convertisseur (8),

**caractérisé en ce que**

le convertisseur (8) comprend un transistor (9), un collecteur (33) du transistor (9) étant la sortie (34) du convertisseur (8), une résistance de mesure (10) connectée par une borne de celle-ci (11) à un émetteur (12) du transistor (9) et par une autre borne de celle-ci (29) au cadre (30, 38, 39) du régulateur, un élément de rétroaction (16) connecté par une entrée de celui-ci (20) à l'émetteur (12) du transistor (9), et un amplificateur opérationnel (13) connecté par une entrée d'inversion de celui-ci (14) à une sortie (15) de l'élément de rétroaction (16) et à une première borne (17) d'une résistance de référence (18) connectée par une deuxième borne de celle-ci (19) à une borne positive (20) d'une source de tension continue de référence (21), une sortie (26) de l'amplificateur opérationnel (13) étant connectée à une base (27) du transistor (9), une entrée non-inversion (22) de l'amplificateur opérationnel (13) étant la première entrée (23) du convertisseur (8), une borne négative (28) de la source de tension continue de référence (21) étant connectée au cadre (30, 38, 39) du régulateur.

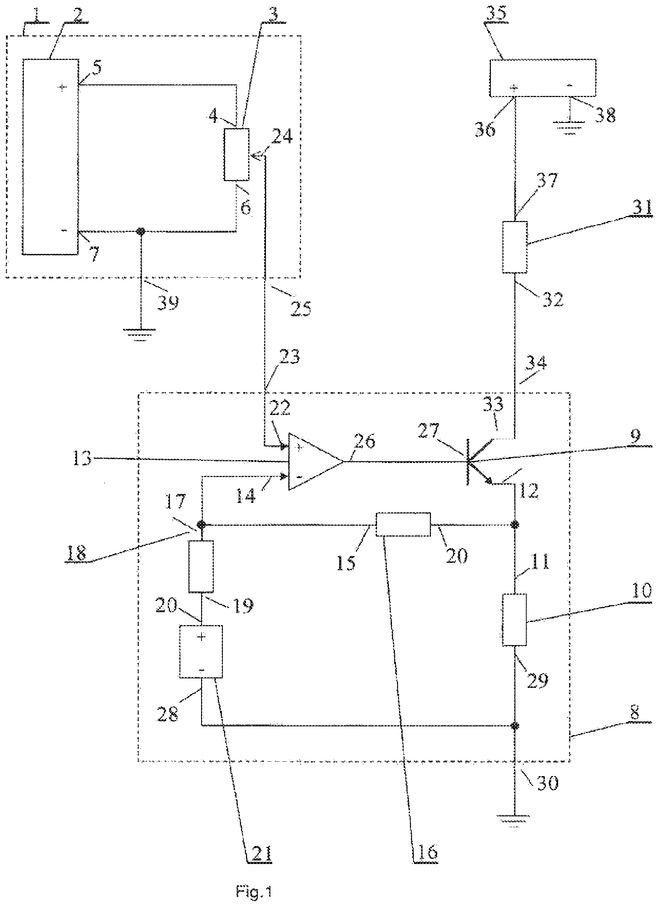

Fig.1

## REFERENCES CITED IN THE DESCRIPTION

**Patent documents cited in the description**

- US 20140002040 A1

**Non-patent literature cited in the description**

- **U. TIETZE ; C. SCHENK, MOSCOW.** Electronic Circuits: Handbook for Design and Application. Mir, 1982